# DEMANDE DE BREVET EUROPEEN

(11) **EP 2 009 338 A1**
(43) Date de publication de la demande: **31.12.2008**
(21) Numéro de dépôt: 08290586.0
(22) Date de dépôt: 19.06.2008
(51) Int. Cl.: F16L 9/04, F16L 9/18, F16L 57/02, F16L 59/065, F16L 59/14

(54) **Conduite renforcée à deux enveloppes et méthode de fabrication**

(30) Priorité: 29.06.2007 FR 0704706
(71) Demandeur: IFP, 92852 Rueil-Malmaison Cédex (FR)
(72) Inventeur: Averbuch, Daniel, 69390 Vernaison (FR); Martinez, Mickael, 69003 Lyon (FR)

(57) **Abrégé**

La conduite à deux enveloppes comporte un tube interne 2 rigide disposé dans un tube externe rigide 3, les tubes étant séparés par un espace annulaire, des éléments de centrage maintenant en position le tube interne par rapport au tube externe.

Le tube externe 3 résiste seul à une pression externe au moins supérieure à 50 bars.

La tenue mécanique de la conduite à la pression externe est renforcée en disposant les éléments de centrage 4 en contact avec le tube interne 2 et avec le tube externe 3.

## Description

La présente invention concerne le domaine des conduites à double enveloppe pour le transport de fluide.

Une conduite à deux enveloppes, couramment nommée "pipe-in-pipe" est constituée de deux tubes métalliques coaxiaux respectivement interne et externe, séparés par un espace annulaire rempli d'un matériau isolant. Le tube interne est maintenu en position par rapport au tube externe par des éléments de centrage, couramment nommés "centreur" ou "spacer". Les spacers sont généralement en forme d'anneau.

Les conduites à deux enveloppes sont notamment utilisées par l'industrie pétrolière pour convoyer le pétrole d'une tête de puits implantée au fond de la mer à une installation de traitement située à la surface de la mer. Les conduites installées au fond de la mer, couramment appelées "flow line" subissent principalement des contraintes mécaniques statiques, par contre, les conduites reliant le fond de la mer à la surface, couramment appelées "riser" sont sollicitées mécaniquement de manière statique et dynamique.

Les exploitations de gisements situés en mer sont effectuées jusqu'à des profondeurs d'eau atteignant actuellement 1500 m et plus, Les développements futurs sont envisagés pour des profondeurs d'eau atteignant 3000 m et au-delà. Il est important de disposer de conduite à haute résistance mécanique.

Les conduites à deux enveloppes sont principalement utilisées pour leur bonne caractéristique d'isolation thermique afin de véhiculer des produits pétroliers chauds dans un environnement marin à grande profondeur. Un trop grand refroidissement de ces produits pétroliers serait problématique aussi bien en régime de production normale qu'en cas d'arrêt de production. Un refroidissement de l'effluent pétrolier convoyé peut en effet provoquer une augmentation de viscosité, une précipitation de paraffine et une floculation des asphaltènes qui augmentent la viscosité de l'effluent et provoquent des dépôts qui diminuent le diamètre intérieur utile de la conduite, ou encore la formation d'hydrates de gaz qui peuvent boucher la conduite.

Le document FR 2 815 693 propose un exemple de réalisation de conduite à deux enveloppes dans lequel le tube interne n'est pas lié au tube externe.

Cependant l'utilisation des conduites de type "pipe-in-pipe" est pénalisée par le poids propre de ces conduites. Actuellement, les conduites "pipe-in-pipe" sont parmi les conduites les plus lourdes posées en mer. Ceci s'explique par le fait que le tube interne doit résister seul à la pression du fluide circulant dans la conduite et que le tube externe doit résister seul à la pression externe hydrostatique.

La présente invention vise à réduire le poids des conduites de type "pipe-in-pipe". L'invention décrit une conduite à deux enveloppes dans laquelle les éléments de centrage renforcent la résistance mécanique du tube externe.

De manière générale, l'invention décrit une conduite renforcée à deux enveloppes comportant un tube interne rigide disposé dans un tube externe rigide, les tubes étant séparés par un espace annulaire, des éléments de centrage maintenant en position le tube interne par rapport au tube externe. Selon l'invention, ledit tube externe résiste seul à une pression externe au moins supérieure à 50 bars et les éléments de centrage sont en contact avec le tube interne et avec le tube externe de manière à renforcer la résistance mécanique du tube externe à la pression externe.

Selon l'invention, les éléments de centrage peuvent être constitués d'un matériau ayant un module d'Young supérieur à 1000 MPa à 20°C. Les éléments de centrage peuvent être constitués d'un matériau ayant une conductivité thermique inférieure à 1 W.m-1.K-1 à une température comprise entre 0°C et 150°C.

Les éléments de centrage peuvent comporter des anneaux disposés dans l'espace annulaire à intervalle compris entre 1 et 5 fois le diamètre externe du tube externe.

Alternativement, les éléments de centrage peuvent comporter une bande enroulée dans l'espace annulaire selon une hélice.

Alternativement, les éléments de centrage peuvent comporter des plots.

L'espace annulaire peut être rempli par un matériau d'isolation ayant une conductivité thermique inférieure à 0,1 W.m⁻¹.K⁻¹. Alternativement, l'espace annulaire peut être soumis à un vide à une pression inférieure à 0,1 bar absolu.

L'invention décrit également une méthode de fabrication d'une conduite renforcée à deux enveloppes, ladite conduite comportant un tube interne rigide disposé dans un tube externe rigide, les tubes étant séparés par un espace annulaire, des éléments de centrage maintenant en position le tube interne par rapport au tube externe. Selon l'invention, on choisit le tube externe rigide de manière à ce que ledit tube externe résiste à une pression externe supérieure à 50 bars et on dispose les éléments de centrage en contact avec le tube interne et avec le tube externe de manière à augmenter la résistance mécanique du tube externe à la pression externe.

Selon l'invention, on peut disposer les éléments de centrage autour du tube interne, on peut introduire le tube interne muni des éléments de centrage dans le tube externe et on peut déformer de manière permanente l'un des deux tubes de manière à mettre en contact les éléments de centrage avec le tube interne et avec le tube externe.

Alternativement, on peut introduire le tube interne dans le tube externe et on peut injecter un matériau dans l'espace annulaire de manière à former des éléments de centrage en contact avec le tube interne et avec le tube externe.

Alternativement, on peut disposer les éléments de centrage autour du tube interne, on peut introduire le tube interne muni des éléments de centrage dans le tube externe et on peut effectuer un serrage mécanique des éléments de centrage contre le tube interne et le tube externe.

On peut disposer dans l'espace annulaire un matériau d'isolation ayant une conductivité thermique inférieure à 0,1 W.m⁻¹.K⁻¹. Alternativement, on peut mettre sous vide l'espace annulaire à une pression inférieure à 0,1 bar absolu.

La conduite selon l'invention présente une meilleure tenue mécanique qui permet de diminuer les épaisseurs d'acier utilisées et donc d'alléger la conduite. Ainsi, la conduite selon l'invention peut être mise en oeuvre pour l'exploitation de gisements situés à des grandes profondeurs d'eau.

D'autres caractéristiques et avantages de l'invention seront mieux compris et apparaîtront clairement à la lecture de la description faite ci-après en se référant aux dessins parmi lesquels :
- la figure 1 présente une vue en coupe longitudinale d'une portion de conduite à double enveloppe,
- les figures 1A et 1B schématisent le flambage d'un tube,
- les figures 2A, 2B, 2C et 2D schématisent différents éléments de centrage,
- les figures 3A, 3B, 3C, 3D, 4A, 4B, 5A, 5B, 5C et 6A, 6B, 6C, 6D schématisent différentes étapes de fabrication d'une conduite à deux enveloppes selon l'invention,
- la figure 7 représente une courbe d'évolution de la pression de collapse d'une conduite de type "pipe-in-pipe" en fonction du jeu entre les éléments de centrage et les tubes.

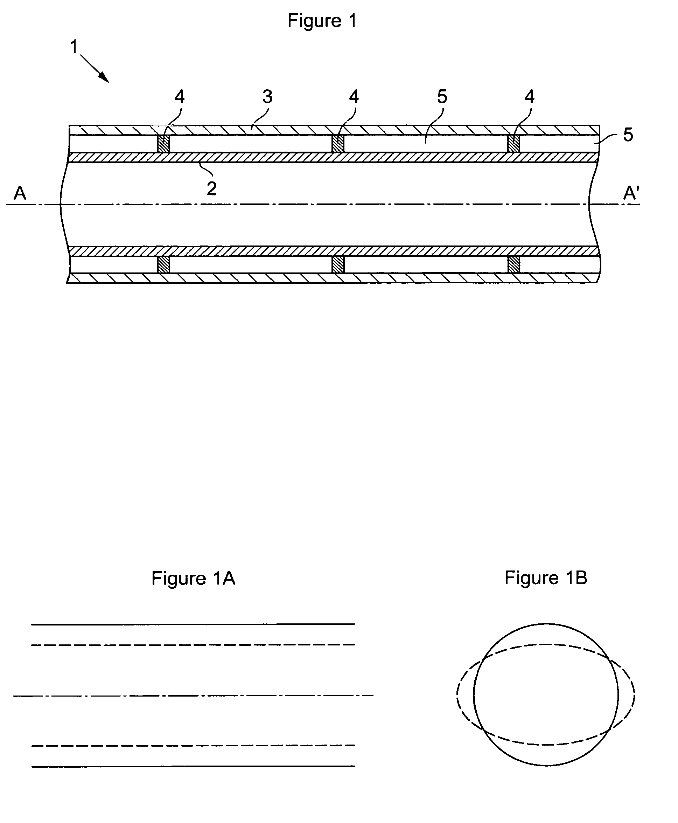

La conduite 1 à deux enveloppes d'axe longitudinal AA', représentée partiellement sur la figure 1, comprend une enveloppe ou tube interne 2, couramment nommée "flowline" et une enveloppe ou tube externe 3, couramment nommée "carrier pipe". Le tube interne 2, dans lequel circule le fluide à transporter, assure la tenue à la pression interne et l'étanchéité vis-à-vis du fluide transporté, par exemple un effluent pétrolier. Le tube externe 3 assure la tenue à la pression externe et l'étanchéité vis-à-vis du milieu externe à la conduite 1, par exemple l'eau de mer.

En général, les tubes 2 et 3 sont réalisés en matériau métallique, par exemple en acier, en aluminium ou en titane. L'invention peut également être mise en oeuvre avec des tubes 2 et 3 constitués en matériau composite à matrice en matériau organique thermoplastique ou thermodurcissable, renforcée avec des fibres de carbone, de verre ou autre.

Le tube interne 2 est positionné par rapport au tube externe 3 au moyen des éléments de centrage ou butées radiales 4 de manière à être sensiblement coaxiaux. Les éléments de centrages 4 sont disposés régulièrement dans l'espace annulaire entre les tubes 2 et 3, le long de la conduite 1.

L'espace annulaire situé entre les éléments de centrage 4 est rempli d'éléments 5 de matériau isolant qui n'est soumis à aucun chargement mécanique notable. On choisit en général un matériau isolant dont la conductivité thermique est inférieure à 0,1 W.m⁻¹.K⁻¹. On peut utiliser des mousses, des aéro-gels ou des gels. Le matériau isolant peut être disposé par enroulement de bandes épaisses autour du tube interne 2.

Alternativement à l'utilisation du matériau isolant, on peut mettre sous vide l'espace annulaire, par exemple à une pression inférieure à 0,1 bar absolu, afin de limiter les échanges thermiques entre les tubes 2 et 3.

Des règles de construction des conduites utilisées pour convoyer un effluent pétrolier dans un environnement marin sont notamment données par les documents API 1111 édition 1999 et DNV-OS-F101.

Selon l'invention, les éléments de centrage 4 ont pour rôle de renforcer la tenue mécanique du tube externe.

La ruine d'une conduite de type "pipe-in-pipe" soumise à une pression externe se produit par flambage du tube externe. Le flambage d'un tube rigide, c'est-à-dire résistant à une pression externe au moins supérieure à 50 bars, sous pression externe peut se produire selon le sens longitudinal du tube et selon la section du tube. Sur les figures 1A et 1B, les traits pleins représentent le tube avant flambage, les traits en pointillés représentent le tube déformé par flambage. Le flambage selon le sens longitudinal correspond à un déplacement uniforme des génératrices du tube comme représenté par la figure 1A. Le flambage selon la section correspond à une ovalisation du tube comme représentée par la figure 1B.

Selon l'invention, on introduit des renforts localisés sur la surface intérieure du tube externe afin de perturber les modes naturels de flambage du tube externe 3. On renforce le tube 3 au moyen des éléments de centrage 4 Selon l'invention, les éléments de centrage 4 sont en contact avec la surface interne du tube externe 3 et renforce localement la tenue mécanique du tube externe dans le but d'augmenter la résistance mécanique du tube à la pression externe. Ainsi, on peut augmenter la résistance mécanique de la conduite, ou bien on peut diminuer les exigences quant au matériau ou aux dimensions des tubes internes et externes. Cela permet de diminuer les épaisseurs d'acier des tubes et, donc, d'alléger les conduites de type "pipe-in-pipe".

Selon l'invention, il n'y a pas de jeu entre le tube interne 2, un élément de centrage 4 et le tube externe 3. L'absence de jeu entre les éléments de centrage et les deux tubes permet de transmettre les efforts entre le tube interne et le tube externe. Les deux enveloppes sont liées mécaniquement et collaborent pour résister ensemble aux chargements mécaniques. En particulier, les efforts radiaux appliqués à la surface extérieure de la conduite 1 peuvent être répartis entre le tube externe et le tube interne.

Les éléments de centrage 4 peuvent être solidaires des tubes 3 et/ou 2, c'est-à-dire qu'une liaison mécanique relie les éléments de centrage 4 au tube 3 et/ou au tube 2. Les éléments de centrage 4 peuvent également être simplement au contact des tubes 3 et/ou 2 sans être fixés à ces tubes.

Pour pouvoir perturber le mode de flambage en tout point du tube externe, les éléments 4 doivent apporter des zones de renfort disposées régulièrement le long de la conduite. Dans le cas des éléments de centrage en forme d'anneau, on peut mettre des éléments de centrage disposés dans l'espace annulaire à intervalle compris entre 1 et 5 fois le diamètre externe du tube externe, le long de la conduite.

On a montré au moyen de calculs numériques, que la charge reprise par les éléments de centrage 4 est relativement faible par rapport à la charge supportée par le tube externe soumis à une pression externe. En effet, une reprise d'une petite partie des efforts engendrés par la pression externe par les éléments 4 perturbe suffisamment les modes de flambage et, de ce fait, augmente la tenue à la pression externe. Les éléments 4 peuvent reprendre de 1% à 10% des efforts engendrés par la pression externe exercée sur le tube 3. Selon l'invention, on peut utiliser des éléments de centrage de résistance mécanique faible par rapport à la résistance mécanique de la conduite externe.

On peut donc choisir les caractéristiques des éléments de centrage de manière à optimiser la tenue mécanique de la conduite à deux enveloppes tout en maintenant une bonne isolation thermique. En effet, les éléments de centrage selon l'invention, du fait qu'ils soient au contact avec le tube interne et le tube externe, constituent des "ponts thermiques", c'est-à-dire un lieu de passage privilégié des flux thermiques entre le tube interne et le tube externe. Pour obtenir les meilleures caractéristiques mécaniques de la conduite 1 selon l'invention, on dispose un maximum d'éléments de centrage les plus résistants possibles. Par contre, pour limiter les échanges thermiques entre l'intérieur et l'extérieur de la conduite 1, on limite le nombre d'éléments de centrage et on choisit des dimensions et des matériaux les moins conducteurs de chaleur. On choisit le matériau, les dimensions et l'espacement des éléments de centrage de manière à limiter les échanges thermiques entre les tubes 2 et 3, tout en maintenant le rôle de répartiteur d'efforts entre ces tubes 2 et 3.

Pour réaliser les éléments de centrage 4 au contact du tube interne et externe, on choisit des matériaux présentant de bonnes propriétés mécaniques, de préférence ayant un module d'Young supérieur à 1000 MPa à 20°C, voire 2000 MPa à 20°C, ainsi que des propriétés thermiques adéquates. La conductivité thermique du matériau peut être inférieure à 1 W.m⁻¹.K⁻¹, de préférence inférieure à 0,5 ou 0,3 W.m⁻¹.K⁻¹, à la température de fonctionnement de la conduite, c'est-à-dire dans l'intervalle entre 0°C et 150°C. Par exemple, on réalise les éléments de centrage en matériau composite mat fibres de verre, c'est-à-dire des fibres courtes d'orientation quelconque, dans une matrice en résine époxy, en polyuréthanne ou en polypropylène. On peut également utiliser une mousse syntactique comportant des microsphères de verre dans une matrice époxy. Ces deux matériaux bornent, en terme de module d'Young et en terme de conductivité thermique, la gamme des matériaux qui sont bien adaptés pour réaliser des éléments de centrage selon l'invention. De manière générale, on peut choisir parmi les matériaux suivants : béton, les matériaux plastiques polymères ou élastomères (époxy, polyuréthanne, polypropylène, polyamine, polyéthylène...) et les matériaux composites.

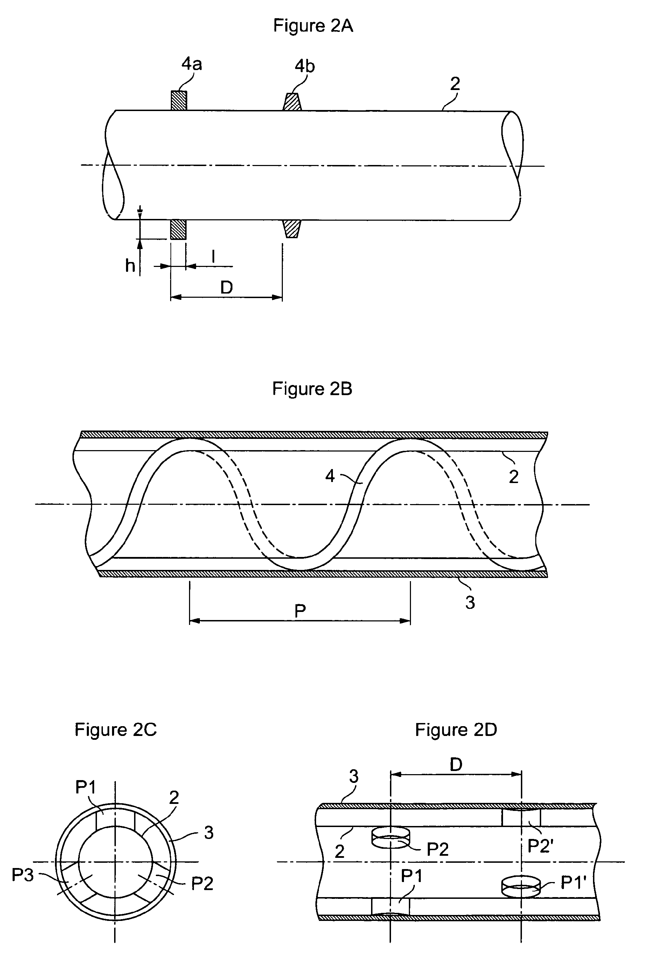

La figure 2A présente un tube interne 3 muni d'éléments de centrage en forme d'anneau. En général, chacun des éléments 4 est composé de deux demi-anneaux. Les demi-anneaux sont assemblés autour du tube interne 2 par exemple par vissage d'un demi-anneau sur l'autre. L'élément de centrage 4a est un anneau de section rectangulaire de largeur 1 et de hauteur h. L'élément de centrage 4b est un anneau de section en forme de trapèze, la plus grande base du trapèze étant au contact du tube interne 2. Les éléments de centrage sont séparés d'une distance D.

En référence à la figure 2B, l'élément de centrage 4 est constitué d'une bande enroulée autour du tube 2 selon une hélice de pas p. La partie supérieure de la bande est en contact avec la paroi interne du tube 3.

On peut réaliser les éléments de centrage en forme de plots qui sont répartis le long de la conduite. Les figures 2C et 2D illustrent la réalisation des éléments de centrage en plots P1, P2 et P3 en forme cylindrique. Il peuvent également prendre d'autres formes par exemple en forme rectangulaire, d'élipse, ou de forme quelconque. Ces plots peuvent être disposés selon des axes orientés selon trois rayons, du tube 3, répartis régulièrement à 120° les uns par rapport aux autres. La base des plots cylindriques repose sur la surface extérieure du tube 2. Les plots s'étendent selon des directions radiales des tubes 2 et 3 jusqu'à être en contact avec la surface interne du tube 3. En référence à la figure 2D, les plots P1, P2 et P3 sont disposés sensiblement dans un plan perpendiculaire à l'axe de la conduite. On peut disposer plusieurs séries de trois plots à intervalle régulier. Sur la figure 2D, on dispose les trois plots P1', P2' et P3' dans un plan situé à une distance D du plan dans lequel sont disposés les plots P1, P2 et P3. Pour améliorer l'effet de renfort procuré par les plots, la série de plots P1', P2' et P3' peut être décalée angulairement, par exemple de 60°, par rapport aux axes des plots P1, P2 et P3.

La conduite à double enveloppes collaborantes selon l'invention peut être fabriquée de différentes manières.

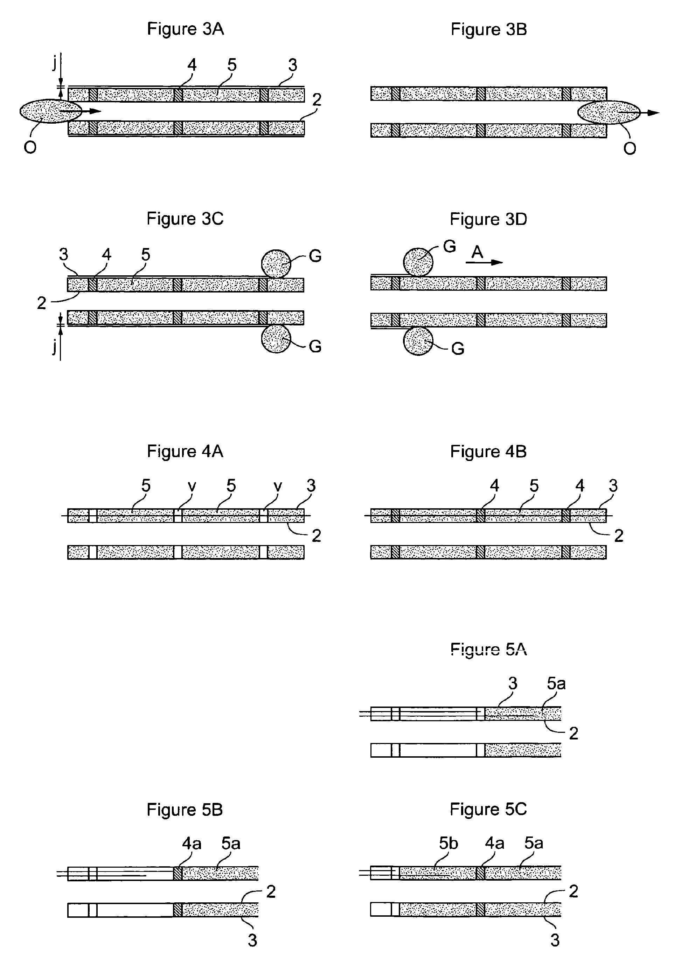

Selon un premier mode de fabrication décrit en référence aux figures 3A et 3B, on réalise la conduite par expansion mécanique du tube interne.
- On fixe les éléments de centrage 4 et les éléments de matériau isolant 5 sur le tube interne 2.
- On fait glisser l'ensemble constitué du tube interne 2, des éléments de centrage 4 et des éléments de matériau isolant 5 dans un tube externe 3 dont le diamètre intérieur est supérieur au diamètre du tube formé par la surface extérieure des éléments de centrage et de matériau isolant. En référence à la figure 3A, il existe un jeu j entre l'élément de centrage 4 et la paroi intérieure du tube externe 3.
- En référence à la figure 3A, on introduit un outil O dans le tube interne 2. L'outil O, par exemple une olive, présente une forme de révolution de diamètre supérieur au diamètre intérieur du tube 2.
- En référence à la figure 3B, on force l'outil à parcourir la longueur du tube de manière à déformer le tube 2 à un diamètre supérieur à son diamètre initial. L'expansion du tube interne permet de déplacer l'élément de centrage 4 afin de supprimer le jeu j entre les éléments de centrage 4 et le tube externe 3.

Alternativement au premier mode de réalisation, on peut réaliser la conduite par réduction mécanique du diamètre du tube externe en effectuant les opérations suivantes décrites en références aux figures 3C e 3D.
- On fixe les éléments de centrage 4 et les éléments de matériau isolant 5 sur le tube interne 2.
- On fait glisser l'ensemble constitué du tube interne 2, des éléments de centrage 4 et de matériau isolant 5 dans un tube externe 3 dont le diamètre intérieur est supérieur au diamètre du tube formé par la surface extérieure des éléments de centrage et de matériau isolant. En référence à la figure 3C, il existe un jeu j entre l'élément de centrage 4 et la paroi intérieure du tube externe 3.
- En référence à la figure 3C, on introduit l'ensemble constitué des tubes 2 et 3 munis des éléments de centrage et de matériau isolant dans un passage calibré par des galets G. Le passage est en forme de disque de rayon inférieur au rayon extérieur du tube 3.
- En référence à la figure 3D, la rotation des galets G entraîne la conduite selon la direction marquée par la flèche A. Ainsi, en passant dans le passage délimité par les galets G, le tube 3 est déformé jusqu'à venir au contact des éléments de centrage 4. Le jeu j entre les éléments de centrage 4 et le tube externe 3 est supprimé.

Selon un deuxième mode de fabrication décrit en référence aux figures 4A et 4B, on réalise la conduite par coulage des éléments de centrage 4.
- On fixe les éléments de matériau isolant 5 sur le tube interne 2 en laissant des espaces vides V entre deux éléments 5 successifs. Ces espaces V sont destinés à accueillir les éléments de centrage 4.
- Un introduit l'ensemble constitué du tube interne 2 muni des éléments de matériau isolant 5 dans le tube externe 3 pour obtenir une conduite schématisée par la figure 4A.
- On remplit les espaces vides V par injection de matière de manière à obtenir des éléments de centrage 4 qui sont en contact avec le tube interne 2 et le tube externe 3 comme représenté sur la figure 4B. La matière injectée sous forme liquide ou pâteuse dans les vides V durcit et forme les éléments de centrage 4.

Alternativement, on peut également couler les éléments de centrage 4 en effectuant les étapes suivantes, décrites en références aux figures 5A, 5B et 5C.
- On introduit le tube interne 2 dans le tube externe 3.
- En référence à la figure 5A, on injecte un premier élément 5a de matériau isolant dans l'espace annulaire situé entre les deux tubes.
- En référence à la figure 5B, on injecte à la suite du premier élément de matériau isolant 5a un premier élément de centrage 4a.
- En référence à la figure 5C, on injecte un deuxième élément 5b de matériau isolant à la suite du premier élément de centrage 4a, et ainsi de suite jusqu'à obtenir une conduite selon l'invention.

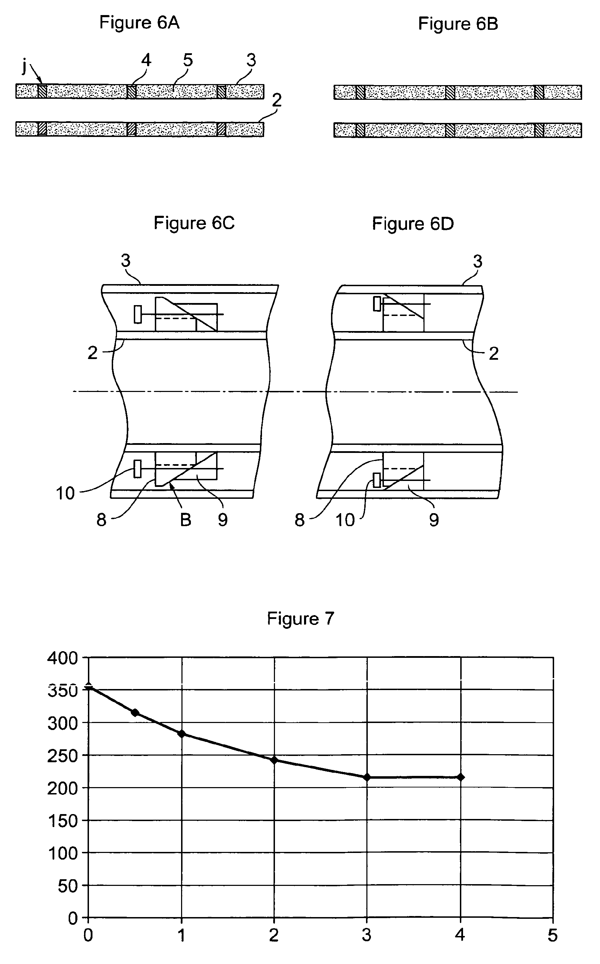

Selon un troisième mode de fabrication décrit en référence aux figures 6A, 6B, 6C et 6D on réalise la conduite par serrage mécanique des éléments de centrage 4.
- On introduit le tube interne 2 dans le tube externe 3.
- On introduit un premier élément de matériau isolant 5 dans l'espace annulaire défini entre les deux tubes.
- On introduit un premier élément de centrage 4 à la suite du premier élément de matériau isolant 5. L'élément de centrage 4 est monté dans l'espace annulaire avec un jeu j comme représenté sur la figure 6A : l'élément de centrage 4 présente un diamètre intérieur supérieur au diamètre extérieur du tube interne 2 et/ou un diamètre extérieur inférieur au diamètre intérieur du tube externe 3.
- On effectue un serrage du premier élément de centrage 4 sur la paroi extérieure du tube interne et sur la paroi intérieure du tube externe de manière à obtenir une conduite selon la figure 6B. Par exemple, le serrage peut être effectué selon le mécanisme représenté par la figure 6C. Le mécanisme comporte un premier anneau conique 8 qui s'appuie sur la surface extérieure du tube interne 2, un deuxième anneau conique 9 qui prend appuie sur la surface B de l'anneau 8. La vis 10 traverse librement l'anneau 8 et est vissée dans un taraudage pratiqué dans l'anneau 9. La vis 10 forme un système vis/écrou avec la pièce 9. La rotation de la vis 10 permet de faire glisser l'anneau 9 au contact de l'anneau 8 sur la surface conique B. On visse jusqu'à ce que l'anneau 9 viennent en butée contre la surface interne du tube 3.
   Alternativement, la vis 8 peut être remplacée par un rivet.

L'exemple numérique présenté ci-après permet d'illustrer l'intérêt d'un jeu nul entre les éléments de centrage et le tube externe d'une conduite de type "pipe-in-pipe".

On a étudié la résistance à la pression à l'écrasement, couramment nommée "collapse", d'une conduite à double enveloppe soumise à une pression externe. La conduite est constituée d'un tube interne séparé d'un tube externe par des éléments de centrage en mousse syntactique.

Le tube interne présente un diamètre externe de 10" (273,1 mm). Le tube externe présente un diamètre externe de 13,73" (348,7 mm). Ces tubes sont réalisés en acier : X65. La mousse syntactique, qui est constituée d'une matrice époxy comportant des microsphères de verre, présente un module d'Young de 3000 MPa à 20°C et 1000 MPa à 130°C.

Les anneaux ont une largeur de 0,04 m et sont répartis à intervalle régulier de 0,9 m. Les éléments de centrage en forme d'anneau de section rectangulaire sont en contact avec le tube interne. Par contre, il existe un jeu entre les éléments de centrage et le tube externe.

La pression de collapse de la conduite a été déterminée au moyen de calculs numériques, pour différentes valeurs du jeu séparant l'élément de centrage du tube externe. La figure 7 présente la courbe de la pression de collapse de la conduite en fonction du jeu entre l'élément de centrage et le tube externe. Le jeu est indiqué par l'axe des abscisses en millimètre. La pression de collapse indiquée par l'axe des ordonnées en bar.

On constate que la conduite présente la meilleure résistance au collapse lorsque le jeu entre l'élément de centrage et le tube externe est nul. Un jeu de 3 mm est suffisant pour supprimer tout rôle mécanique à l'élément de centrage dans la tenue au collapse. Un jeu de 1 mm réduit de moitié le gain en pression de collapse apporté par l'élément de centrage.

Par conséquent, la conduite selon l'invention, qui propose de transmettre des efforts entre les tubes par les éléments de centrage, présente effectivement l'avantage d'être mécaniquement plus résistante au collapse.

## Revendications

1. Conduite renforcée à deux enveloppes comportant un tube interne rigide disposé dans un tube externe rigide, les tubes étant séparés par un espace annulaire, des éléments de centrage maintenant en position le tube interne par rapport au tube externe, **caractérisée en ce que** ledit tube externe résiste seul à une pression externe au moins supérieure à 50 bars et **en ce que** les éléments de centrage sont en contact avec le tube interne et avec le tube externe de manière à renforcer la résistance mécanique du tube externe à la pression externe.

2. Conduite selon la revendication 1, dans laquelle les éléments de centrage sont constitués d'un matériau ayant un module d'Young supérieur à 1000 MPa à 20°C.

3. Conduite selon l'une des revendications précédentes, dans laquelle les éléments de centrage sont constitués d'un matériau ayant une conductivité thermique inférieure à 1 W.m⁻¹.K⁻¹ à une température comprise entre 0°C et 150°C.

4. Conduite selon l'une des revendications précédentes, dans laquelle les éléments de centrage comportent des anneaux disposés dans l'espace annulaire à intervalle compris entre 1 et 5 fois le diamètre externe du tube externe.

5. Conduite selon l'une des revendications 1 à 3, dans laquelle les éléments de centrage comportent une bande enroulée dans l'espace annulaire selon une hélice.

6. Conduite selon l'une des revendications 1 à 3, dans laquelle les éléments de centrage comportent des plots.

7. Conduite selon l'une des revendications 1 à 6, dans laquelle l'espace annulaire est rempli par un matériau d'isolation ayant une conductivité thermique inférieure à 0,1 W.m⁻¹.K⁻¹.

8. Conduite selon l'une des revendications 1 à 6, dans laquelle l'espace annulaire est soumis à un vide à une pression inférieure à 0,1 bar absolu.

9. Méthode de fabrication d'une conduite renforcée à deux enveloppes, ladite conduite comportant un tube interne rigide disposé dans un tube externe rigide, les tubes étant séparés par un espace annulaire, des éléments de centrage maintenant en position le tube interne par rapport au tube externe, la méthode étant **caractérisée en ce qu'**on choisit le tube externe rigide de manière à ce que ledit tube externe résiste à une pression externe supérieure à 50 bars et **en ce qu'**on dispose les éléments de centrage en contact avec le tube interne et avec le tube externe de manière à augmenter la résistance mécanique du tube externe à la pression externe.

10. Méthode selon la revendication 9, dans laquelle on dispose les éléments de centrage autour du tube interne, on introduit le tube interne muni des éléments de centrage dans le tube externe et on déforme de manière permanente l'un des deux tubes de manière à mettre en contact les éléments de centrage avec le tube interne et avec le tube externe.

11. Méthode selon la revendication 9, dans laquelle on introduit le tube interne dans le tube externe et on injecte un matériau dans l'espace annulaire de manière à former des éléments de centrage en contact avec le tube interne et avec le tube externe.

12. Méthode selon la revendication 9, dans laquelle on dispose les éléments de centrage autour du tube interne, on introduit le tube interne muni des éléments de centrage dans le tube externe et on effectue un serrage mécanique des éléments de centrage contre le tube interne et le tube externe.

13. Méthode selon l'une des revendications 9 à 12, dans laquelle on dispose dans l'espace annulaire un matériau d'isolation ayant une conductivité thermique inférieure à 0,1 W.m⁻¹.K⁻¹.

14. Méthode selon l'une des revendications 9 à 12, dans laquelle on met sous vide l'espace annulaire à une pression inférieure à 0,1 bar absolu.
